**Europäisches Patentamt**

**European Patent Office**

**Office européen des brevets**

(11) Publication number: **0 121 131**
**B1**

(12) **EUROPEAN PATENT SPECIFICATION**

(45) Date of publication of patent specification: **14.10.87**

(21) Application number: **84102349.2**

(22) Date of filing: **05.03.84**

(51) Int. Cl.⁴: **B 23 D 21/08**

(54) **Manual pipe cutter.**

(30) Priority: **07.03.83 GB 8306217**

(43) Date of publication of application:
**10.10.84 Bulletin 84/41**

(45) Publication of the grant of the patent:
**14.10.87 Bulletin 87/42**

(84) Designated Contracting States:
**AT BE CH DE FR GB IT LI LU NL SE**

(56) References cited:
**DE-A-1 452 705**
**DE-C- 70 989**
**US-A-2 447 371**
**US-A-3 715 804**
**US-A-4 157 615**
**US-A-4 177 557**
**US-A-4 305 205**

(73) Proprietor: **Courty, Aurèle**
**471, rue Ste.-Madeleine**
**Montréal Quebec H3K 2K8 (CA)**

(72) Inventor: **Courty, Aurèle**
**471, rue Ste.-Madeleine**
**Montréal Quebec H3K 2K8 (CA)**

(74) Representative: **May, Hans Ulrich, Dr.**
**Thierschstrasse 27**
**D-8000 München 22 (DE)**

Courier Press, Leamington Spa, England.

# Description

This invention relates to a pipe cutter of the hand tool type. A pipe cutter of this type, and as defined in the pre-characterizing part of the following claim 1, is described in US—A—4 305 205. In this known pipe cutter, the cutter advancing apparatus is operated by hand from the side near the opening of the C-shaped housing, and pivotable around an axis which extends substantially in a plane vertical to the pipe axis. It is therefore not easily accessible when the pipe cutter is used in a restricted space, for instance when cutting a pipe fixed near a wall.

A manual pipe cutter of somewhat similar construction is also described in US—A—4 177 557 of the applicant. In this known cutter, the rotatable cutting head was made in one piece and, consequently, the various parts of the pipe cutter were difficult to assemble and to disassemble. Moreover, the cutting disc was mounted for rotation about a fixed axis relative to the cutting head and, therefore, was difficult of access for removal and sharpening. This known cutter further includes a screw-and-knob arrangement to press a cutting disc against the pipe to be cut. This screw-and-knob arrangement protrudes from the cutting head, so that the pipe cannot be cut when it is very close to an obstruction.

It is a general object of the present invention to provide a manual pipe cutter of improved construction and more efficient operation in which the cutter advancing apparatus is replaced by a gear-and-pushbutton system to progressively displace the cutting disc for strong pressing engagement with a pipe to be cut.

This object is reached by constructing a manual pipe cutter of the above mentioned type with the features of the characterizing part of the following claim 1.

Features of preferred embodiments are defined by the following sub-claims.

The manual pipe cutter of the invention is of relative simple construction. It is easier to assemble and disassemble and the cutting disc can be easily removed for sharpening or replacement. Moreover, the cutter advancing apparatus occupies much less room than in known manual pipe cutters, and is adapted for convenient operation, so that a pipe may be cut even when very close to an obstruction.

Brief description of the drawings

The object and advantages of the present invention will be better understood with reference to the following detailed description of a preferred embodiment thereof which is illustrated, by way of example, in the accompanying drawings, in which:

Figure 1 is a perspective view of a manual pipe cutter according to the present invention;

Figure 2 is a side view of the same manual pipe cutter;

Figure 3 is a top view of the same manual pipe cutter;

Figure 4 is a cross-sectional view of the head portion of the pipe cutter as seen along line 4—4 in Figure 3;

Figure 5 is a cross-sectional view as in Figure 4, but looking in the opposite direction relative to the arrows in Figure 3;

Figure 6 is a side view of the cutting head forming part of the illustrated manual pipe cutter;

Figure 7 is a bottom view of the head portion of the same pipe cutter;

Figure 8 is a cross-sectional view as seen along line 8—8 in Figure 2;

Figure 9 is a top view of a gear arrangement with an associated rack shown in cross-section and forming part of the pipe cutter;

Figure 10 is a cross-sectional view as seen along line 10—10 in Figure 9;

Figures 11 and 12 are side views of a pushbutton and associated gears forming part of the same pipe cutter to progressively increase the bite of the cutter into the pipe being cut;

Figures 13 to 17 inclusive are schematic side views illustrating the sequence of operation of the manual pipe cutter shown in more detail in the preceding figures.

Detailed description of the preferred embodiment

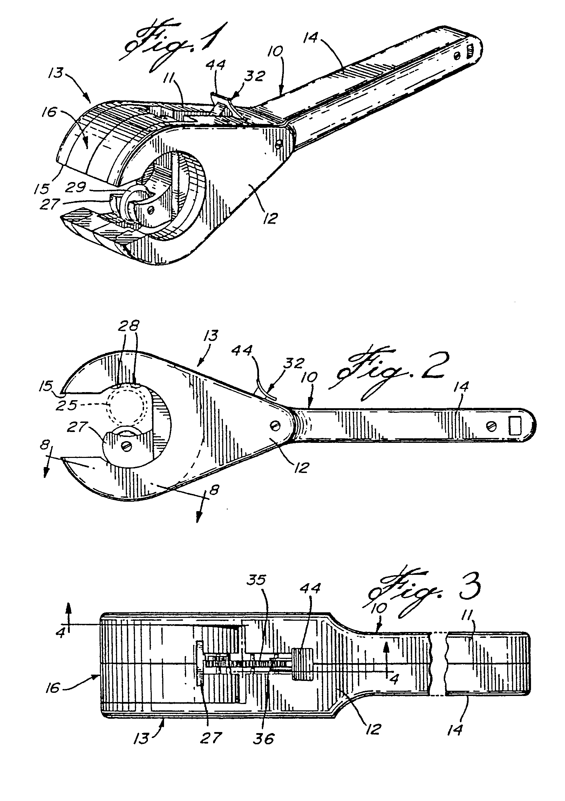

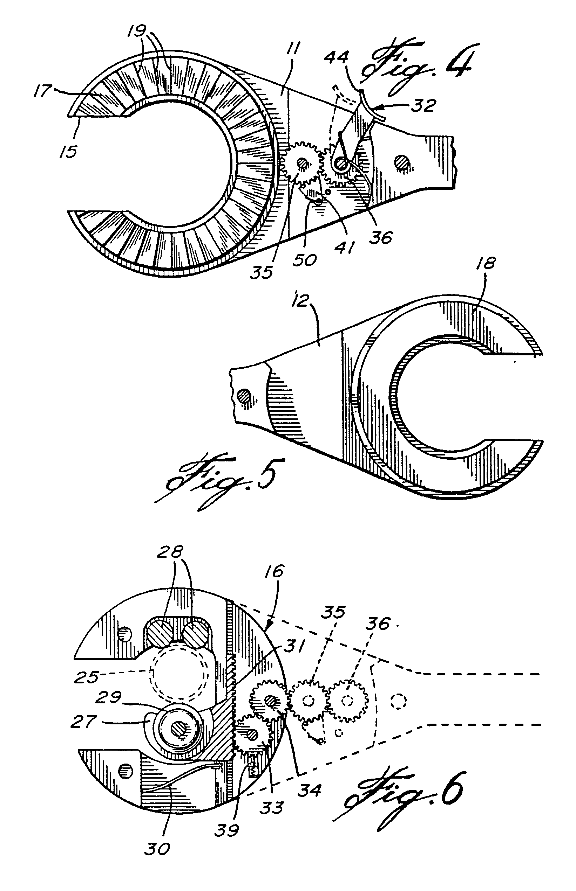

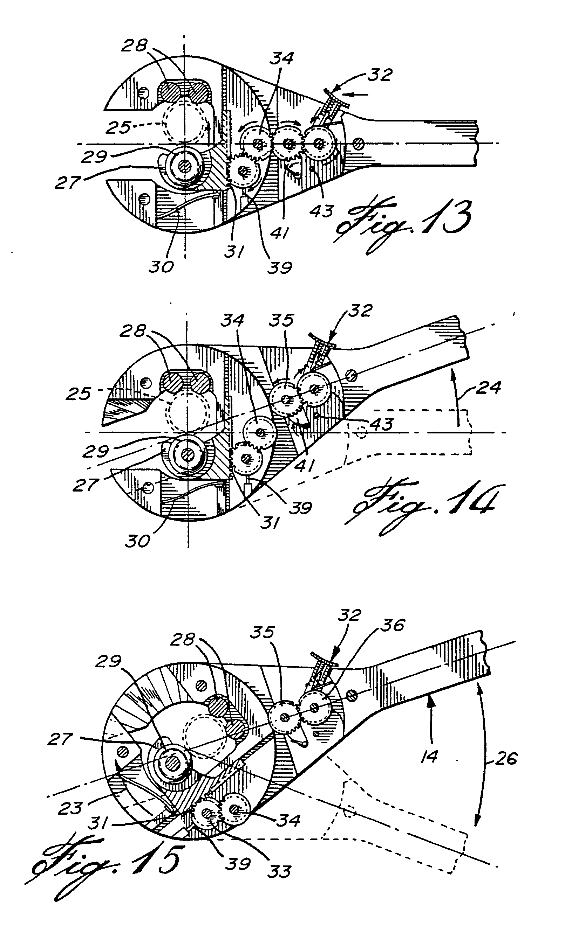

The illustrated manual pipe cutter of Figures 1 to 17 comprises a body 10, made of two halves 11 and 12 cooperatively forming a cutting head portion at 13 and a handle portion at 14. The cutting head portion 13 defines a pipe passage extending transversely through it and has a cutout at 15 forming an open mouth communicating transversely with the pipe passage to allow relative transverse displacement of a pipe inward into the pipe passage in the cutting head portion.

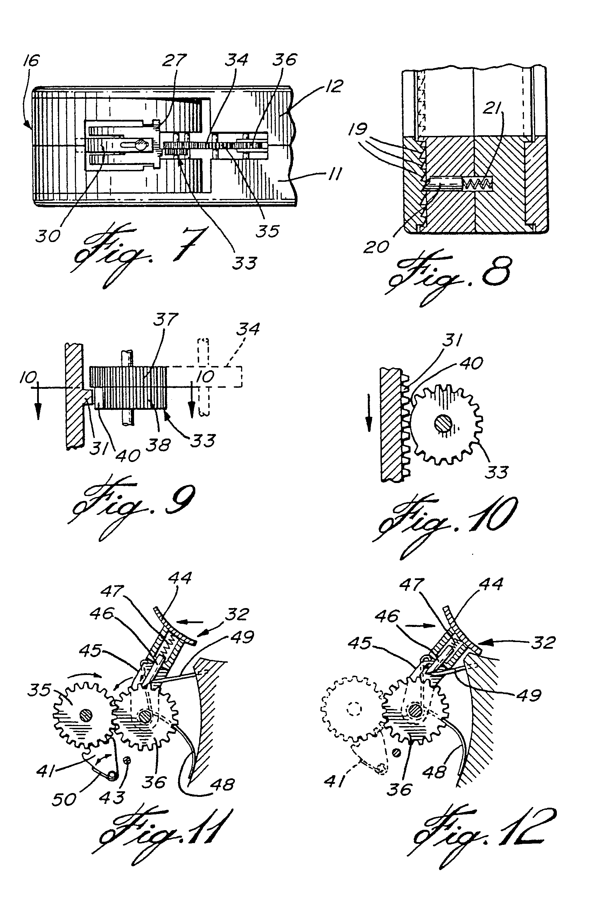

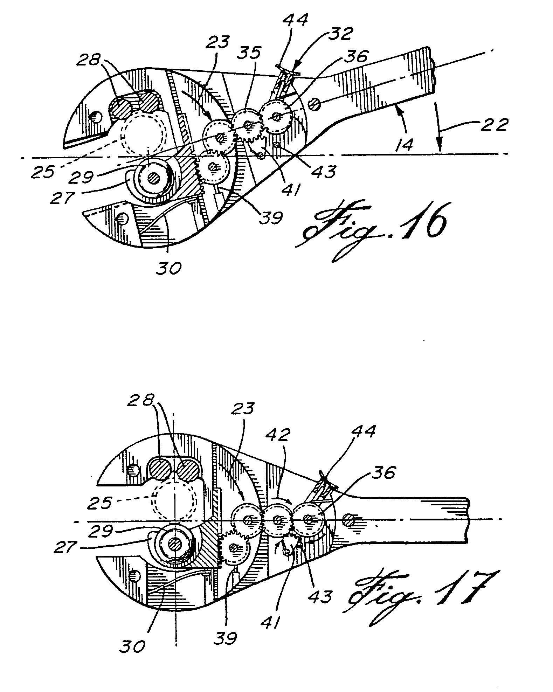

A cutting head 16, made of two half-parts secured together by bolts, is rotatably mounted in the cutting head portion between the corresponding cutting head portions of the spaced-apart halves 11 and 12 of the body 10. Thus, the cutting edge portions of the two halves of the body define a pair of inner faces 17 and 18 which are mutually facing each other and engage the opposite sides respectively of the cutting head 16. The inner face 17 is formed with ratchet teeth 19 serially arranged circularly around the pipe passage. As shown in Figure 8, a bore extends transversely into the cutting head from the face adjacent the ratchet teeth 19. A pawl, in the form of a pin 20, is slidable in that bore and is outwardly biased by a spring 21, such that its outer pointed end operatively abuts against the adjacent tooth 19. The ratchet teeth 19 and the pawl 20 are constructed and arranged such that, when the handle 14 is lowered in the direction of the arrow 22, as shown in Figure 16, the body 10 rotates the cutting head in the clockwise direction, as shown by the arrow 23. When the handle 14 is pivoted in the direction of the arrow 24, as shown in Figure 14, the pawl 20 and ratchet teeth 19 allow the body 10 to idly pivot relative to the cutting head 16, such as when the latter bites a pipe 25. Thus, the reciprocative pivoting of the handle 14, as shown by the arrow 26, causes only unidirectional rotation of the cutting head 16 in the direction of the arrow 23, as shown in Figure 16. The cutting head 16, as the head portion 13, is provided with a pipe passage and a cutout forming an open mouth to insert the cutter endwise around the pipe 25 to be cut.

A cutter-pressing jaw 27 is slidably mouted on the cutting head and is slidable in a predetermined direction transversely relative to the pipe passage and to the open mouth of the cutting head. A pair of guide rollers 28 are rotatively carried by the cutting head diametrically opposite to the cutter-pressing jaw 27 relative to the pipe passage. This allows operative displacement of the jaw toward the rollers to hold a pipe 25 between the rollers 28 and a cutting disc 29 carried by the jaw. The cutting disc 29 is arranged to engage the pipe 25 edgewise to cut it transversely. A blade spring 30 is fixed at one end to the cutting head and at its other end to the cutter-pressing jaw 27 and is made and arranged to retract the latter in opposite direction away from the rollers 28.

A toothed rack 31 is fixed to the cutter-pressing jaw 27 and is bodily slidable endwise in the direction of the rollers 28. A pushbutton-and-gear arrangement is provided to progressively displace or slide the jaw 27 in the direction of the rollers 28 as the cutting operation progresses. The pushbutton-and-gear arrangement includes a pushbutton 32 and a ratchet-and-gear system operatively connecting the pushbutton 32 to the toothed rack and arranged for controlled operation of the same.

The ratchet-and-gear system includes a first pair of gears 33 and 34 carried by the rotatable cutting head 16 and a second pair of gears 35 and 36 carried by the body 10 and displaceable with it translatively. The gears 33 and 34 are in meshing engagement one with the other and are translatively rotatable with the rotatable cutting head. The gear 33 is a double-toothed wheel or gear including one axial side 37 that drives the other axial side 38 bodily with it. The toothed wheel or gear forms a ratchet wheel 37 which meshes with the gear 34. A pin 39 is carried by the rotatable cutting head 16 and is spring biased into engagement as a pawl between a pair of teeth of the side 37 of the double gear. This forms a pawl-and-ratchet assembly to allow only unidirectional rotation of the gears. The side 38 of the double gear 33 has a couple of teeth removed, thus forming a non-toothed circumferential portion 40 that produces a detent to release the toothed rack 31 and allow the jaw to be retracted by the spring blade 30 away from the rollers 28 at the end of one cut through a pipe 25.

The gears 34 and 35 form intermediate connection gears which mesh one with the other cyclically; that is, only when for each rotation of the cutting head 16, the latter has its mouth registering with the mouth of the head portion 13. Then gears 35 and 36 mesh one with the other. A gear sector 41 meshes with the intermediate connection gear 35 and is pivoted to produce a pivotable pawl to block the gears 35 and 36 against rotation in the direction opposite to the direction indicated by the arrow 42 in Figure 17 during a portion of the cycle of operation. This is done by abutment of the gear sector 41 with a pin 43.

The pushbutton 32 includes a pushbutton head 44 which is secured at the outer end of an arm 45 that is pivoted at its other end around the axis of the gear 36. The pushbutton also includes a plunger 46 that is biased by a spring 47 toward pawl-like engagement with an adjacent tooth of the gear 36. A spring wire 48 engages the pivotable arm 45 to bias the same angularly away from engagement of the plunger 46 with a tooth of the gear 36. The plunger 46 is shaped to be wedged away from the gear 36 upon abutment with a blade 49.

By pushing on the head 44 of the arm 45, the gear 36 is rotated and this also rotates the gears 35, 34, and 33 and pivots the gear sector 41 away from the abutment pin 43, as shown by the arrows in Figure 13. Then, the cutter-pressing jaw 27 slides toward the rollers 28 and the cutting disc 29 can thus cut deeper into the pipe 25. When the head 44 of the arm 45 is released, the plunger 46 frees the gear 36. Upward pivoting of the handle 14 frees the gear 35 and the spring wire 50 of the gear sector 41 then pivots the latter until its abutment with the pin 43; this is shown by the arrows in Figure 14. As aforementioned, the up-and-down pivoting of the handle 14, as indicated by the arrow 26, causes rotation of the cutting head 16 and of the cutting disc 29 in the direction of the arrow 23 around the pipe to cut it; this is shown in Figure 15. As shown in Figure 16, when a turn of the cutting head has been completed, the connection gears 34 and 35 mesh again one with the other to repeat the operation of the arm 45 to further slide the jaw 27 toward the rollers 28. Figure 17 shows the movements occurring upon release of the head 44 and by action of the spring wire 50 on the gear sector 41. As mentioned, when the jaw 27 has reached the end of its course toward the rollers 28, the non-toothed portion 40 of the gear 33 registers with the toothed rack 31 and the jaw 27 is returned by the spring 30 to its starting position.

**Claims**

1. A manual pipe cutter comprising
a) a handle (14) attached to a C-shaped body (10) including a cutting head portion (13) having a pipe passage extending therethrough;
b) a cutting head (16) rotatable in the cutting head portion substantially around the pipe passage;
c) a cutter-pressing jaw (27) mounted on the cutting head and displaceably settable by a manually operated cutter advancing means in a predetermined direction transversely with respect to the pipe passage;
characterized in that
d) a toothed rack (31) is fixedly secured to the cutter-pressing jaw in alignment with, and displaceable bodily together with the cutter pressing jaw in said predetermined direction;

e) a ratchet and gear system (33, 34; 35, 36) is engageable with the toothed rack (31) such as to move and retain the latter together with the cutter-pressing jaw in a set cutting position along said predetermined direction;

f) a manual actuator is mounted on said body and includes a push button (32) which operates on said ratchet and gear system to set the cutting position at least when the body and the cutting head are in one given recurrent angular relation;

g) the ratchet and gear system includes at least one toothed wheel (33, 37) operatively connected intermediate the manual actuator and the tooth rack (31) such as to operatively drive the latter in said predetermined direction;

h) a pawl (39) for operatively retaining the toothed rack and cutter-pressing jaw (27) against bodily, displacement in a direction opposite to said predetermined direction; and

i) a releasing device includes a second toothed wheel (38) bodily rotatable with said one toothed wheel (37), operatively meshing with the toothed rack (31) and having a non-toothed circumferential portion (40) such that the second toothed-wheel unmeshes from the toothed rack (31) upon rotation into recurrent registration therewith, thereby releasing the toothed rack for the backward displacement thereof.

2. A manual pipe cutter according to claim 1, characterized in that the ratchet and gear system includes a first pair of gears (33, 34) and second pair of gears (35, 36), the first pair of gears is mounted on the cutting head and is translatively rotatable therewith, the second pair of gears is mounted on said body (10) operatively between the push button (32) and the first pair of gears, and each of said pair of gears includes one intermediate connecting gear (34 and 35, respectively), selectively meshing with intermediate connecting gear of the other pair of gears on cycling registration of the two pairs of gears produced by rotation of the cutting head (16) relative to said body (10).

3. A manual pipe cutter according to claim 2, characterized in that the ratchet and gear system includes a gear sector (41) pivotable adjacent the intermediate connection gear (35) of the second pair of gears and forming a pivotable pawl operatively holding the intermediate connection gear (35) of the second pair of gears fixedly in the path of displacement of the intermediate connection gear (34) of the first pair of gears and constructed and arranged for operative meshing together of the intermediate connection gears (34, 35).

4. A manual pipe cutter according to claim 3, characterized in that the push button (32) includes a head (44), and a spring-biased plunger (46) operatively pushed against a tooth of the other gear (36) of the second pair of gears (35, 36) and operatively rotating the latter upon pushing on the push button head.

5. A manual pipe cutter according to any of claims 1 to 4, characterized in that the cutting head portion (13) forms a pair of spaced-apart inner faces (17, 18) mutually facing each other and extending around the pipe passage, on opposite sides of the cutting head, one face (17) is formed with ratchet teeth (19) serially and operatively arranged around the pipe passage, and a pawl (20) is mounted on the cutting head, biased into operative engagement with the ratchet teeth of said one face and constructed and arranged to allow pawl and ratchet control of the rotation of said body around the cutting head.

6. A manual pipe cutter according to any of claims 1 to 5, characterized in that the cutting head (16) of generally annular configuration, extends annularly around the pipe passage, has a cutout forming a radially-extending open mouth operatively registering with the open mount of the cutting head portion (13), and includes a pair of guide rollers (28) positively mounted thereon for guiding engagement with a pipe (25) positioned lengthwise into the pipe passage.

7. A manual pipe cutter according to claim 6, characterized in that the cutting head (16) includes a spring (30) operatively engaging the cutter-pressing jaw (27) and operatively biases the same in said opposite direction away from the guide rollers.

8. A manual pipe cutter according to any of claims 1 to 7, characterized in that the body (10) is made of two halves (11 and 12) co-operatively forming the cutting head portion (13).

9. A manual pipe cutter according to any of Claims 1 to 8, characterized in that the cutting head (16) is made of two half-parts secured together by bolts.

**Patentansprüche**

1. Handbetätigter Rohrabschneider mit

a) einem Handgriff (14), der an einem C-förmigen Körper (10) angebracht ist, der einen Schneidkopfteil (13) mit einem sich durch diesen erstreckenden Rohrdurchlass aufweist;

b) einem Schneidkopf (16), der im Schneidkopfteil im wesentlichen rund um den Rohrdurchlass drehbar ist;

c) einer Schneidradandruckbacke (27), die im Schneidkopf montiert ist und durch eine handbetätigte Schneidradvorschubvorrichtung in einer vorbestimmten Richtung quer zum Rohrdurchlass verschiebbar einstellbar ist;
dadurch gekennzeichnet, daß

d) eine Zahnstange (31) unbeweglich an der Schneidradandruckbacke befestigt ist und in einer Richtung mit der Schneidradandruckbacke liegend und körperlich zusammen mit ihr in der vorbestimmten Richtung verschiebbar ist;

e) ein Sperrklinken- und Zahnradsystem (33, 34; 35, 36) mit der Zahnstange (31) in Eingriff gebracht werden kann, so daß letztere bewegt und zusammen mit der Schneidradandruckbacke in einer bestimmten Schneidstellung längs der vorbestimmten Richtung gehalten werden kann;

f) eine Handbetätigungsvorrichtung am Körper gehalten ist und einen Druckknopf (32) aufweist, der auf das Sperrklinken- und Zahnradsystem einwirkt, um die Schneidstellung wenigstens dann festzulegen, wenn sich der Körper und der Schneidkopf in einer gegebenen wiederkehrenden Winkelstellung zueinander befinden;

g) das Sperrklinken- und Zahnradsystem wenigstens ein Zahnrad (33, 37) aufweist, das in Wirkverbindung zwischen die Handbetätigungsvorrichtung und die Zahnstange (31) eingeschaltet ist, um letztere in der vorbestimmten Richtung anzutreiben;

h) ein Sperrstift (39) vorgesehen ist, um in Wirkverbindung die Zahnstange und die Schneidradandruckbacke (37) gegen körperliche Verschiebung in einer Richtung entgegengesetzt zu der vorbestimmten Richtung zu sichern; und

i) eine Freigabevorrichtung ein zweites Zahnrad (38) aufweist, das körperlich mit dem Zahnrad (37) drehbar ist und in Wirkverbindung mit der Zahnstange (31) kämmt und einen zahnfreien Umfangsabschnitt (40) aufweist, so daß das zweite Zahnrad bei Drehung in eine wiederkehrende Registrierstellung mit der Zahnstange (31) außer Eingriff mit dieser kommt und so die Zahnstange für die Rückverschiebung derselben freigibt.

2. Handbetätigter Rohrabschneider nach Anspruch 1, dadurch gekennzeichnet, daß das Sperrklinken- und Zahnradsystem ein erstes Paar von Zahnrädern (33, 34) und ein zweites Paar von Zahnrädern. (35, 36) aufweist, wobei das erste Paar von Zahnrädern am Schneidkopf montiert und in Translationsbewegung mit diesem drehbar ist und das zweite Paar von Zahnrädern am Körper (10) in einer Wirkstellung zwischen dem Druckknopf (32) und dem ersten Paar von Zahnrädern montiert ist und jedes der Paare von Zahnrädern ein zwischengeschaltetes Verbindungszahnrad (34 bzw. 35) aufweist, das mit dem zwischengeschalteten Verbindungszahnrads des anderen Paars von Zahnrädern beim zyklischen Registrieren der zwei Paare von Zahnrädern, das durch die Drehung des Schneidkopfes (16) bezüglich des Körpers (10) erzeugt wird, selektiv kämmt.

3. Handbetätigter Rohrabschneider nach Anspruch 2, dadurch gekennzeichnet, daß das Klinken- und Zahnradsystem einen Zahnradsektor (41) aufweist, der neben dem zwischengeschalteten Verbindungszahnrad (35) des zweiten Paars von Zahnrädern schwenkbar ist und eine schwenkbare Klinke bildet, welche das zwischengeschaltete Verbindungszahnrad (35) des zweiten Paars von Zahnrädern in Wirkverbindung fest im Weg der Verschiebung des zwischengeschalteten Verbindungszahnrads (34) des ersten Paars von Zahnrädern hält, wobei die Konstruktion und Anordnung so getroffen ist, daß die zwischengeschalteten Verbindungszahnräder (34, 35) im Arbeitsgang miteinander kämmen.

4. .Handbetätigter Rohrabschneider nach Anspruch 3, dadurch gekennzeichnet, daß der Druckknopf (32) einen Kopf (34) aufweist und ein federbelasteter Tauchstift (46) in Wirkverbindung gegen einen Zahn des anderen Zahnrads (36) des zweiten Paars von Zahnrädern (35, 36) gedrückt wird und beim Drücken auf den Druckknopfkopf letzteres in Wirkverbindung dreht.

5. Handbetätigter Rohrabschneider nach einem der Ansprüche 1 bis 4, dadurch gekennzeichnet, daß der Schneidkopfteil (13) ein Paar von in Abstand voneinander angeordneten, einander zugewandten Innenflächen (17, 18) bildet, die sich auf entgegengesetzten Seiten des Schneidkopfes rings um den Rohrdurchlass erstrecken, wobei eine Fläche (17) mit einer Reihe von Klinkenzähnen (19) gebildet ist, die in wirksamer Weise rings um den Rohrdurchlass angeordnet sind, und eine Sperrklinke (20) am Schneidkopf gehalten und in Wirkverbindung mit den Klinkenzähnen der genannten einen Fläche beaufschlagt ist, wobei die Konstruktion und Anordnung so getroffen ist, daß die Drehung des Körpers rund um den Schneidkopf durch Sperrklinke und Sperrzähne regelbar ist.

6. Handbetätigter Rohrabschneider nach einem der Ansprüche 1 bis 5, dadurch gekennzeichnet, daß der Schneidkopf (16) eine im ganzen ringförmige Ausbildung aufweist, sich ringförmig rund um den Rohrdurchlass erstreckt und einen Ausschnitt hat, der ein sich in radialer Richtung erstreckendes offenes Maul bildet, das im Arbeitsgang in übereinstimmende Lage mit dem offenen Maul des Schneidkopfteils (13) gebracht werden kann, und der Schneidkopf ein Paar von Führungsrollen (28) aufweist, die an ihm drehbar montiert sind, um in Führungseingriff mit einem längs in den Rohrdurchlass eingebrachten Rohr (25) zu kommen.

7. Handbetätigter Rohrabschneider nach Anspruch 6, dadurch gekennzeichnet, daß der Schneidkopf (16) eine Feder (30) aufweist, welche in Wirkverbindung mit der Schneidradandruckbacke (27) steht und diese in der entgegengesetzten Richtung, von den Führungswalzen weg, beaufschlagt.

8. Handbetätigter Rohrabschneider nach einem der Ansprüche 1 bis 7, dadurch gekennzeichnet, daß der Körper (10) aus zwei Hälften (11 und 12) hergestellt ist, die miteinander den Schneidkopfteil (13) bilden.

9. Handbetätigter Rohrabschneider nach einem der Ansprüche 1 bis 8, dadurch gekennzeichnet, daß der Schneidkopf (16) aus zwei, durch Bolzen aneinander befestigten Halbteilen hergestellt ist.

**Revendications**

1. Coupe-tube manuel, comprenant

a) une poignée (14) fixée à un corps (10) en forme de C comprenant une partie (13) porte-tête de découpage, que traverse un passage du tube;

b) une tête (16) de découpage, pouvant tourner dans la partie porte-tête de découpage, sensiblement autour du passage du tube;

c) une mâchoire (27) de pression de l'organe de découpage, montée sur la tête de découpage et réglable, par déplacement par un moyen manuel d'avance de l'organe de découpage, dans un sens prédéterminé transversalement par rapport au passage de tube;

outil caractérisé en ce que:

d) une crémaillère (31) est fixée à la mâchoire de pression de l'organe de découpage, en étant alignée avec cette mâchoire et en pouvant se déplacer en bloc avec elle dans le sens prédéterminé;

e) un système de cliquet et pignons (33, 34; 35, 36) peut venir au contact de la crémaillère (31) de façon à déplacer et maintenir cette dernière avec la mâchoire de pression de l'organe de découpage en une position réglée de découpage de long du sens prédéterminé précité;

f) un organe d'actionnement manuel est monté sur ledit corps et comprend un bouton-poussoir (32) qui manoeuvre le système de cliquet et pignons pour régler la position de découpage au moins quand le corps et la tête de découpage sont en une relation angulaire récurrente donnée;

g) le système de cliquet et pignons comprend au moins une roue dentée (33, 37) à liaison fonctionnelle entre l'organe manuel de manoeuvre et la crémaillère (31), de façon à entraîner fonctionnellement cette dernière dans le sens prédéterminé précité;

h) un cliquet (39) pour retenir fonctionnellement la crémaillère et la mâchoire (27) de pression de l'organe de découpage pour empêcher un déplacement en bloc dans un sens opposé audit sens prédéterminé; et

i) un dispositif de dégagement comprenant une seconde roue dentée (38) pouvant tourner en bloc avec ladite première roue dentée (37), en engrenant avec la crémaillère (31) et en ayant une partie (40) de circonférence non dentée de façon que la seconde roue dentée se dégage de son engrènement avec la crémaillère (31) après une rotation qui la met en alignement récurrent avec la crémaillère, de façon à dégager la crémaillère pour lui permettre de se déplacer vers l'arrière.

2. Coupe-tube manuel selon la revendication 1, caractérisé en ce que le système de cliquet et pignons comprend une première paire de pignons (33, 34) et une seconde paire de pignons (35, 36), la première paire de pignons étant montée sur la tête de découpage et pouvant tourner transversalement avec elle, la seconde paire de pignons étant montée sur ledit corps (10) pour fonctionner entre le bouton-pressoir (32) et la première paire de pignons, et chacune desdites paires de pignons comprenant un pignon de connexion intermédiaire (34 et 35, respectivement), engrenant sélectivement avec un pignon de connexion intermédiaire de l'autre paire de pignons lors d'un alignement cyclique des deux paires de pignons, produit par la rotation de la tête (16) de découpage par rapport audit corps (10).

3. Coupe-tube manuel selon la revendication 2, caractérisé en ce que le système de cliquet et pignons comprend un secteur denté (41) pouvant pivoter près du pignon (35) de connexion intermédiaire de la seconde paire de pignons et formant un cliquet pouvant pivoter, maintenant fixement le pignon (35) de connexion intermédiaire de la seconde paire de pignons sur le trajet de déplacement du pignon (34) de connexion intermédiaire de la première paire de pignons, et qui est construit et agencé de façon à assurer l'engrenage mutuel, en service, des pignons (34, 35) intermédiaires de connexion.

4. Coupe-tube manuel selon la revendication 3, caractérisé en ce que le bouton-poussoir (32) comprend une tête (44) et un plongeur (46), poussé par un ressort contre une dent de l'autre pignon (36) de la seconde paire de pignons (35, 36) et pouvant faire tourner cette dernière lors d'une poussée exercée sur la tête du bouton-poussoir.

5. Coupe-tube manuel selon l'une quelconque des revendications 1 à 4, caractérisé en ce que la partie (13) porte-tête de découpage forme deux faces internes (17, 18) espacées et se faisant mutuellement face, et qui s'étendent autour du passage du tube, des côtés opposés de la tête de découpage, une face (17) comportant des dentes (19) en rochet disposées en série et de manière fonctionnelle autour du passage du tube, et en ce qu'un cliquet (20) est monté sur la tête de découpage, poussé pour venir en contact de service avec les dents en rochet de ladite face et construit et agencé de façon à permettre la commande, par le cliquet et le rochet, de la rotation dudit corps autour de la tête de découpage.

6. Coupe-tube manuel selon l'une quelconque des revendications 1 à 5, caractérisé en ce que la tête (16) de découpage a une configuration de forme générale annulaire, s'étend annulairement autour du passage du tube, comporte une découpure formant une entrée libre s'étendant radialement et qui s'aligne en service avec l'entrée libre de la partie (13) porte-tête de découpage, et comprend une paire de galets (28) de guidage, montée sur cette tête de façon à pouvoir tourner et à assurer un contact de guidage avec un tube (25) placé pour un déplacement longitudinal dans le passage de tube.

7. Coupe-tube manuel selon la revendication 6, caractérisé en ce que la tête (16) de découpage comprend un ressort (30) venant en service au contact de la mâchoire (27) de pression de l'organe de découpage et sollicitant en service cette mâchoire dans ledit sens opposé pour l'éloigner des galets de guidage.

8. Coupe-tube manuel selon l'une quelconque des revendications 1 à 7, caractérisé en ce que le corps (10) est constitué de deux moitiés (11 et 12) formant en coopération la partie (13) porte-tête de découpage.

9. Coupe-tube manuel selon l'une quelconque des revendications 1 à 8, caractérisé en ce que la tête (16) de découpage est constituée de deux demi-parties fixées ensemble par des boulons.

Fig. 1

Fig. 2

Fig. 3

1

Fig. 4

Fig. 5

Fig. 6

Fig. 7

Fig. 8

Fig. 9

Fig. 10

Fig. 11

Fig. 12

Fig. 13

Fig. 14

Fig. 15

*Fig. 16*

*Fig. 17*